# EUROPEAN PATENT APPLICATION

(11) **EP 4 696 200 A1**
(43) Date of publication of application: **18.02.2026**
(21) Application number: 24851959.7
(22) Date of filing: 09.08.2024
(51) Int. Cl.: A47C 27/12, D04H 3/033

(54) **THREE DIMENSIONAL NETWORK STRUCTURE**

(30) Priority: 10.08.2023 JP 2023131112
(71) Applicant: C-Eng Co., Ltd., Gamagori-shi, Aichi 443-0057 (JP)
(72) Inventor: TAKAOKA, Yoshihisa, Gamagori-shi, Aichi 443-0057 (JP)
(74) Representative: Zacco Sweden AB
(86) International application number: PCT/JP2024/028659
(87) International publication number: WO 2025/033542

(57) **Abstract**

It is an object to provide a three-dimensional network structure in which functionality of protrusions is sustained over a long period of time with high durability. There is provided a three-dimensional network structure used as a cushion, having a total average bulk density of 0.01-1.5 g/cm³, and comprising a plurality of continuous filaments having random loops and being partially fusion bonded. The three-dimensional network structure comprises: a three-dimensional network structure main body; a plurality of protrusions formed on a specific surface of the three-dimensional network structure main body and protruding in a thickness direction thereof, wherein the plurality of protrusions are continuously provided via bottom portions interposed therebetween and having a height lower than that of top portions of the protrusions, and at least one of the plurality of protrusions have an average bulk density that is 1.05 - 6 times the average bulk density of the three-dimensional network structure main body.

## Description

### Technical Field

The present invention relates to a three-dimensional network structure for use in a cushion such as a mattress, a floor mat, and a seat cushion.

### Background Art

The mattress of the conventional three-dimensional network structure proposed by the present applicant in Patent literatures 1 through 3 has a basically smooth surface and has high hardness and high repulsion, which is preferred by well-built persons with firm body shapes. On the other hand, soft -type products are also provided for thin-built persons by changing the material of the resin and by adjusting the shape of the nozzle and the manufacturing method.

Patent literature 4 aims to provide a fiber molded article which is excellent in elasticity, compressive resistance, heat-retaining property, moisture-absorbency, sound absorbency and the like, and is in particular used as a padding material for bed. Patent Literature 4 discloses a fiber-molded article. The crimped fibers for stuffing are three-dimensionally bonded with an adhesive to form an unevenness configuration on an entire surface of the fiber-molded article which substantially retains a crimping property due to the crimping ability and crimping-formation of the fibers.

On the other hand, the high-repulsion urethane foam has been widely adopted as other material element of the mattress. The harder urethane form has been employed because the harder mattress has been preferred in the countries such as Japan, and also due to the purpose of suppressing the sagging of the mattress.

When the harder urethane foam is used as the mattress while maintaining its surface flat, there arises a problem that the back and the waist of the user are easily damaged, and a bedsore is likely to be caused by the pressure applied to the waist or the like. In order to solve the problem, the surface may be subjected to profile processing (or surface modification technology processing). The profile processing is a process to produce a "profile" (unevenness surface) with respect to a sheet-like material. Due to the profile processing, the unevenness surface makes portions which do not come into contact with the user's body and also making other portions which come into contact with the user's body, so as to obtain the body-pressure dispersion effect and ventilation effect. In addition, due to the air layer formed by the unevenness surface, the user may feel comfortable because he can stay cool in summer and warm in winter. Further, it is advantageous from the viewpoint that the unevenness surface contributes to reducing the stuffiness caused by the perspiration so as to improve the sleeping comfort.

Patent Literature 5 aims to provide a better sleeping comfort and discloses a layered - structure type mattress having a three-dimensional structure net-like body; a soft urethane foam laminated on the three-dimensional structure net-like body; and a storage body for storing the three-dimensional structure net-like body and the soft urethane foam. The soft urethane foam is profile-processed, and the reverse side surface of the processed surface is overlapped in contact with the three-dimensional structure net-like body.

Patent literature 6 discloses a core material for cushion including a three-dimensional network structure having a thermal expansion rate of 0 to 8% in the longitudinal direction before and after a hot-air drying test, and indicates that the surface of a roll is continuously formed into the unevenness configuration at manufacturing stage.

Patent literature 7 discloses a three-dimensional network structure in which a load distribution means is provided, and indicates that the load distribution means is formed by means of a groove or a notch provided inward from the upper or lower side surface of the three-dimensional network structure.

### Citation List

### Patent Literature

Patent literature 1: Japanese Laid-Open Patent Application No. 2006-200118
Patent Literature 2: International Publication 2016/125766
Patent Literature 3: Japanese Patent No. 5454733
Patent Literature 4: Japanese Laid-Open Patent Application No. 55-103345
Patent Literature 5: Japanese Laid-Open Patent Application No. 2015-211703
Patent Literature 6: Japanese Laid-Open Patent Application No. 2017-226230
Patent Literature 7: Japanese Laid-Open Patent Application No. 2006-130283

### Summary of Invention

### Technical Problem

When the three-dimensional network structure described in Patent literatures 1 through 3 is used as a mattress, it is necessary to further improve the sleeping comfort in order to be adopted by consumers of various body types. A product such as a two-layer molded structure, which includes a hard lower layer and a soft upper layer has been developed. In addition, a three-dimensional network structure has been introduced, in which the hardness is varied depending on the area of the mattress. These are, however, still not sufficient.

The three-dimensional network structure disclosed in Patent Literature 4 is obtained by bonding the crimped fibers with the adhesive. Since the adhesive is indispensable to the structure, the network structure is likely to sag, which leads to a problem in durability. Further, there remains a lack of technical consideration for accommodating the various human body types such as persons with slim bodies.

With respect to the mattress using the profile-processed urethane foam as described in Patent Literature 5, problems arise as follows. It opposes to the de-urethane tendency in the world. Since most of the profile processed products of the urethane foam uses the high-repulsion urethane foam, a clear effect is reduced to such a degree that the thin built user recognizes somewhat unevenness feeling. If the softness of the urethane form is pursued, the urethane form is likely to sag soon. In addition, there is a possibility that the convex portion of the profile processed urethane foam is crushed to lose the air permeability. It is natural that the mold or the like may be developed. Due to the low durability of the convex portion, the time period of maintaining the profile processing effect is insufficient. Further, the urethane foam mattress has a problem in that even with profile processing, there is a small amount of acupressure effect, and it is difficult for users to turn over in bed.

Further, in the mattress of the urethane foam, users may easily bottom out due to the load dispersion. In the bed-time posture, a load of the waist portion with respect to the whole body is referred to as 44%, while a load of the back region is referred to as 33%. The weight distribution becomes different depending on the body portions, and some countermeasures are necessary. However, an appropriate improvement measure and manufacturing method are under development. Therefore, it is difficult to obtain an ideal bed-time posture (gentle S-shaped line).

In the network structure of Patent literature 6, even if the surface of the roll is rendered into the unevenness configuration continuously formed at manufacturing, a downward slip occurs and the bulk density of the convex portion of the molded product may be reduced or lost. Further, the surface layer cannot be formed. Therefore, the function such as the acupressure effect by the convex portion is low, and the durability of the convex part is also low.

The network structure of Patent literature 7 has a low acupressure effect because the upper surface of protrusion is flat, and the durability of the protrusions and the compressive durability of the structure are insufficient.

When used as a cushion material in, for example, floor cushions or footrests for office chairs, a three-dimensional network structure with an uneven configuration that provides an acupressure effect is required. Further, the durability of the protrusions is also required.

It is an object of the present invention to provide a three-dimensional network structure in which the acupressure effect and the air permeability by surface protrusions can be enhanced and the functions thereof can be sustained over a long period of time with the increase of the durability.

### Solution to Problem

According to an aspect of the invention, there is provided a three-dimensional network structure used as a cushion, having a total average bulk density of 0.01-1.5 g/cm³, and including a plurality of continuous filaments having random loops and being partially fusion bonded. The three-dimensional network structure includes a three-dimensional network structure main body, a plurality of protrusions formed on a specific surface of the three-dimensional network structure main body and protruding in a thickness direction thereof. The plurality of protrusions are continuously provided via bottom portions interposed therebetween and having a height lower than that of top portions of the protrusions, and at least one of the plurality of protrusions have an average bulk density that is 1.05 - 6 times the average bulk density of the three-dimensional network structure main body.

In the present specification, the term "protrusions" is defined as protruded portions located above a virtual line connecting the upper ends of the bottom portions. The "average bulk density of the three-dimensional network structure main body" is defined as the average bulk density of the portions excluding the protrusions formed on the upper surface and/or the lower surface thereof.

As used herein, the term "cushion" includes, for example, a core material for a mattress, a core material for a vehicle seat, a core material for chairs, a core material of pillows, and floor cushions. The applications include, for example, use for pet products, medical purposes, veterinary and dental applications, seat cushions, products for physically handicapped person, sports, mountain climbing, camping, training, competition, and exercise jig including rehabilitation jig.

The shape of the "cushion" includes a shape such as a rectangular parallelepiped, a cube, an irregular shape such as a curved surface shape, a pillow shape, an elliptical shape, or a combination thereof. The problem can be solved as long as a plurality of protrusions are provided on a specific surface of the cushion.

It is preferable that the protrusions have a bowl shape, a conical shape, a chevron shape (excluding a shape with flat top portion), or a polygonal pyramid shape. Also, it is preferable that the plurality of protrusions are continuously provided in a first direction via the bottom portions interposed therebetween and having a height lower than that of the top portions of the protrusions , and the plurality of protrusions are continuously provided in a second direction perpendicular to the first direction via the bottom portions interposed therebetween and having a height lower than that of the top portions of the protrusions.

It is preferable that each of the protrusions and the bottom portions have a surface layer having a bulk density higher than an average bulk density of an inner portion of the three-dimensional network structure main body, and the surface layer of the bottom portions is thicker than the surface layer of the top portions of the protrusions, or a high-density portion is continuously present directly below the surface layer of the bottom portions.

Herein, the term "inner portion of the three-dimensional network structure main body" refers to a portion excluding any high-density surface layer or high-density side portion, if present, in the three-dimensional network structure main body.

It is preferable that each of the plurality of protrusions has the surface layer and a central portion covered by the surface layer, and the surface layer has a bulk density higher than that of the central portion.

It is preferable that an average bulk density of the central portion of at least one protrusion of the plurality of protrusions is higher than the average bulk density of the inner portion of the three-dimensional network structure main body.

It is preferable that a number of the protrusions is 100 - 2500 per 1 m².

It is preferable that the three-dimensional network structure is laminated with at least one of a urethane foam, a nonwoven sheet and another three-dimensional network structure, or is laminated with a urethane foam, a nonwoven fabric, or a double russell fabric as a cover covering the protrusions.

Herein, the "another three-dimensional network structure" includes a structure having a flat surface, a structure having stripe-shaped protrusions on one or both surfaces thereof or a structure in which bowl-shaped, conical shaped, chevron-shaped or the other type of protrusions are arranged in linear, staggered, or latticed pattern.

It is preferable that the protrusions are arranged in one of a linear, staggered or lattice pattern.

It is preferable that the height or the average bulk density of the protrusions is different depending on a region of the three-dimensional network structure.

It is preferable that the protrusions are formed on an upper surface and a lower surface of the three-dimensional network structure main body, and a shape, a bulk density, a height, or an arrangement of the protrusions formed on the upper surface is different from the protrusions formed on the lower surface.

It is preferable that a recessed portion or an inclined portion is formed by thermal processing or ultrasonic processing on a specific surface on which the protrusions are formed, and the protrusions remain in the recessed portion or the inclined portion.

It is preferable that the three-dimensional network structure further includes a high-density side surface portion having a higher density than the average bulk density of the three-dimensional network structure main body on at least two opposing side surfaces.

It is preferable that the three-dimensional network structure further includes an elongation prevention member configured to prevent the three-dimensional network structure from extending in a longitudinal direction or a lateral direction, wherein the elongation prevention member is a high-density side surface portion that has a higher density than the average bulk density of the three-dimensional network structure main body, and is disposed on at least two opposing side surfaces.

According to another aspect of the invention, there is provided a seat cushion, a mattress, a pillow or a chair including the three-dimensional network structure.

### Advantageous Effects

The three-dimensional network structure according to the present invention has an effect of improving the acupressure effect and air permeability. By increasing the bulk density of the protrusions, the repulsive force of the protrusions is high and the durability is also high. Load dispersibility can also be increased, and, for example, when used in a mattress, it becomes easy to turn over. From the reason that the bulk density of the protrusions is high and the surface high-density layer of the bottom portion is thicker than that of the protrusions, the compression durability of the structure itself increases.

The load dispersibility or the like of the three-dimensional network structure can be adjusted by the surface layer of the protrusion, the bulk density, the size and shape of the protrusion, and the number per area of the protrusion. Cushions having a performance and function suitable for the body shape and preference of the user can be provided. For example, a three-dimensional network structure may be provided that enables a slim person to obtain a softer touch by adjusting factors such as the surface layer, bulk density, and the size of the protrusions. Further, by changing the height and the bulk density of the protrusions depending on the area of the structure, it is possible to provide a feeling appropriate for the corresponding portions of the user's body. The durability of the protrusions may be further enhanced by increasing the number of fusion bonded points and the fusion bonding strength of the filaments, and the bulk density of the protrusions.

### Brief Description of Drawings

Fig. 1 is a plan view photograph of a three-dimensional network structure sheet of a first embodiment;
Fig. 2 is a perspective view photograph;
Fig. 3 is an enlarged plan view photograph;
Fig. 4 is a bottom view;
Fig. 5 is a schematic cross-sectional view of the three-dimensional network structure (a schematic cross-sectional view taken along line A-A in Fig. 1);
Fig. 6 is a perspective view photograph of a mattress of a three-dimensional network structure of a second embodiment;
Fig. 7 is a perspective view photograph from a different angle from Fig. 6;
Fig. 8 is an enlarged plan view photograph;
Fig. 9 is a bottom view;
Fig. 10 is an enlarged bottom view;
Fig. 11 is a schematic cross-sectional view of the three-dimensional network structure;
Fig. 12A to Fig. 12E are schematic views of the manufacturing process of the three-dimensional network structure;
Fig. 13A and Fig. 13B are views for explaining the processing of the three-dimensional network structure;
Fig. 14A to Fig 14 E are views for explaining high-density portions of a three-dimensional network structure.

### Description of Embodiments

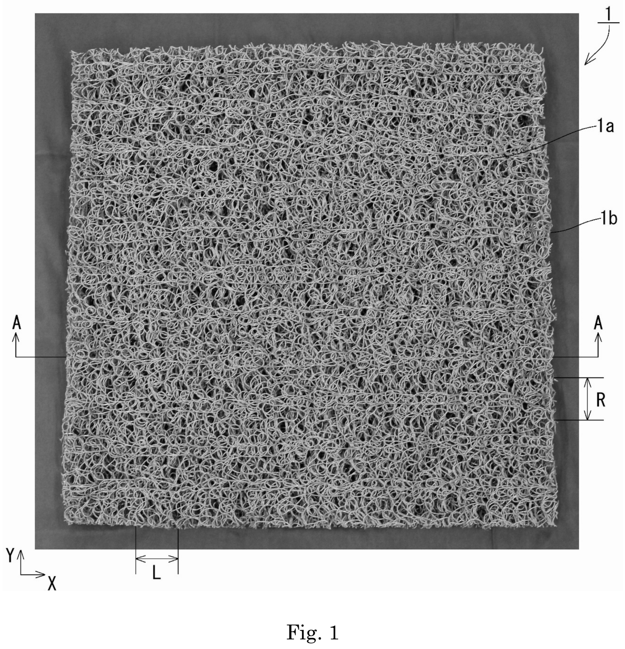

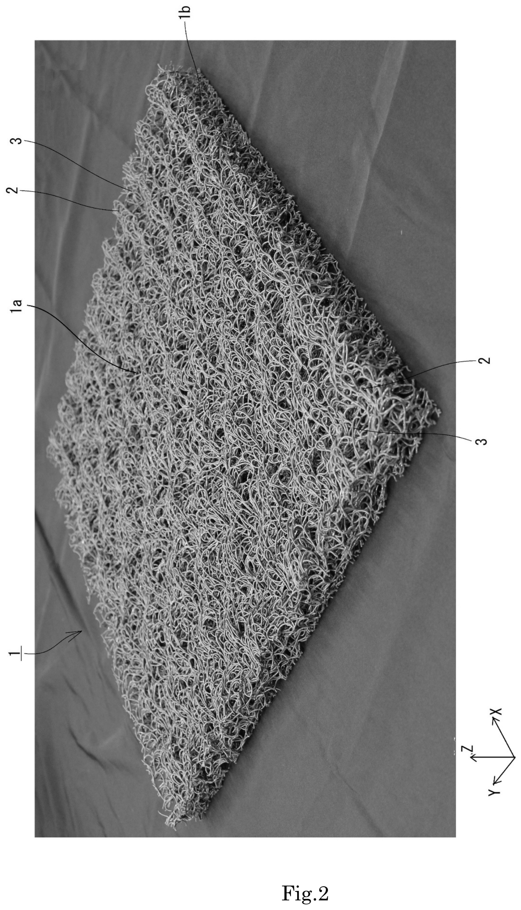

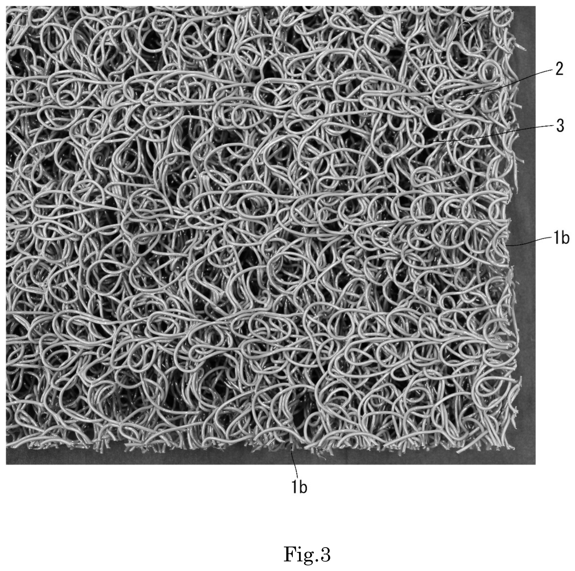

Referring to Figs. 1 through 5, a three-dimensional network structure 1 (hereinafter, also simply referred to as a structure 1) according to a first embodiment is described. Each embodiment shown below is an example of the present invention, and the present invention is not limited to the following embodiments. The structure 1 is a three-dimensional spring structure in which random loops of continuous filaments made of a thermoplastic resin are fusion bonded to each other in a molten state.

The structure 1 can be used as a cushion, and can be used as, for example, a seat cushion of a chair or a vehicle seat. Fig. 1 through Fig. 4 show the structure appropriately cut for the purpose of explanation and the size after being cut is 45 cm in length × 45 cm in width × 3 cm in maximum thickness. This provides the three-dimensional network structure in which a plurality of continuous filaments having random loops are partially fusion bonded, and form a hexahedron having an upper surface 1a, four side surfaces 1b, and a lower surface 1c. The average bulk density of the entire structure 1 is preferably 0.01-1.5 g/cm³, and more preferably 0.01-1.2 g/cm³.

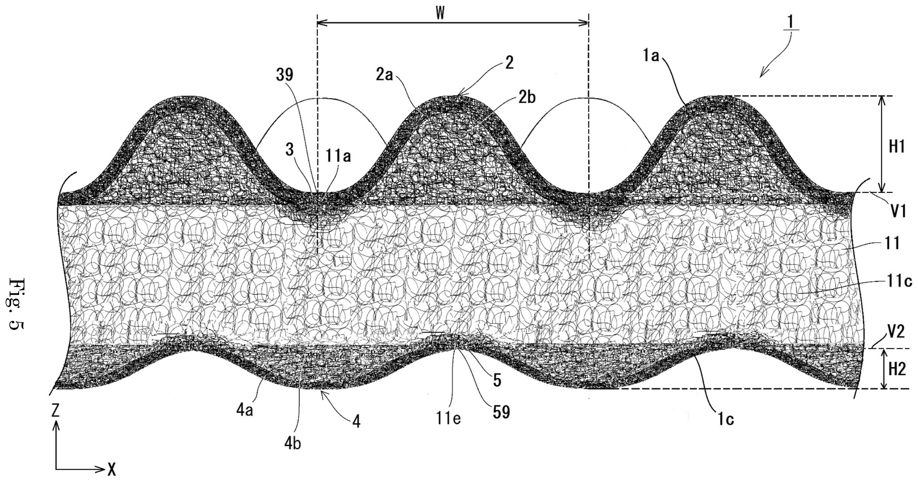

As shown in Figs. 1, 2, 5, bowl-shaped protrusions 2 protruding in the thickness direction (Z direction) are formed on the upper surface 1a of the structure 1, in a staggered pattern as observed in a plan view. On the upper surface 1a, a plurality of rows (R) are formed in which the plurality of protrusions 2 are arranged in the X direction via the bottom portions 3. On the upper surface 1a, a plurality of rows (L) are also formed in which the plurality of protrusions 2 are arranged via the bottom portions 3 in the Y direction perpendicular to the X direction. As shown in Fig. 5, the protrusions 2 and the bottom portions 3 form a waveform shape in a cross-sectional view in the directions X and Y. The bottom portions 3 are portions having the lowest surface in a side view in a specified or entire region, and also serve as boundary portions between the protrusions 2 (see Fig. 5). The bottom portions 3 are also arranged in a staggered pattern on the upper surface 1a as observed in a plan view. The protrusions 2 are formed over the entire surface of the upper surface 1a of the structure 1, however, they are not limited thereto, and the protrusion 2 may be formed only in a part of the regions, such as the waist, the shoulder of the users.

The plurality of protrusions 2 are continuously formed via the bottom portions 3 interposed therebetween. The number of the protrusions 2 is preferably 100-2500 per 1 m², and more preferably 250-450 per 1 m². The shape of the protrusions 2 is a bowl-shaped configuration having a round top portion, but is not limited thereto, and may be a conical shape, chevron shape, or polygonal pyramid shape. In order to improve the acupressure effect, it is preferable that the top portion of the protrusions 2 does not have a flat surface. The height, shape and bulk density of the protrusions 2 may each be uniform, or may vary depending on regions. Alternatively, the height, shape and bulk density of the protrusions 2 may be differently mixed. The protrusions 2 may have a configuration including two or three top portions. It is preferable that the configuration of the protrusions 2 is neither an undercut nor reversely tapered configuration. The arrangement of the protrusions 2 is not limited to a staggered pattern, but may also be a linear pattern or a lattice pattern. The arrangement may be determined according to a request.

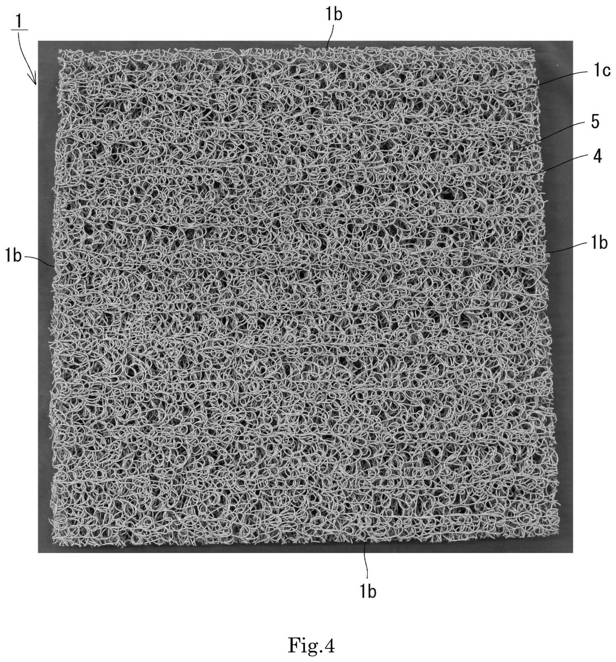

As shown in Figs. 4 and 5, the lower surface 1c of the structure 1 is provided with stripe-shaped protrusions 4 protruding in the thickness direction (- Z direction) and stripe-shaped bottom portions 5 in the extruding direction at the time of manufacturing. The height of the stripe-shaped protrusions 4 is preferably 4-70 mm. The stripe-shaped protrusions 4 and the stripe-shaped bottom portions 5 may be provided in a direction perpendicular to the extruding direction. The stripe-shaped protrusions 4 are formed over the entire surface of the lower surface 1c of the structure 1, however, they are not limited thereto, and may be formed only in a part of the regions.

As a main material constituting the continuous filaments, by way of an example, a polyethylene-based resin, polypropylene-based resin such as polyolefin resin, polyethylene-based thermoplastic elastomer, polyester-based thermoplastic elastomer, propylene-based thermoplastic elastomer, and a mixture thereof may be adopted. A functional material such as an incombustible or flame-retardant agent may be appropriately included in the main material. The color masterbatch may be mixed during the melting of the filaments to color the filaments.

The filaments constituting the structure 1 have a solid, hollow or irregular cross section as appropriately adopted. The diameter of the filaments is preferably 0.1-3.0 mm, and more preferably 0.3-1.5 mm in the case of solid cross section, and preferably 0.2-5.0 mm in the case of the irregular or hollow cross section.

The structure 1 shown in Figs. 1 through 4 is an example of the present invention. The structure 1 has an average bulk density of 0.068 g/cm³. The filaments are made of polyethylene resin and have a solid cross section. The diameter of the filaments is 1.0 mm, and the color of the filaments is gray. The number of the protrusions 2 is 355 per 1 m².

Fig. 5 shows a schematic cross-sectional view for describing the bulk density of the structure 1. The structure 1 has a three-dimensional network structure main body 11 (hereinafter, also simply referred to as a main body 11), the plurality of protrusions 2 formed on the upper surface of the main body 11, and the plurality of stripe-shaped protrusions 4 formed on the lower surface of the main body 11. Bottom portions 3 are positioned on the upper surface of the main body 11. Stripe-shaped bottom portions 5 are positioned on the lower surface of the main body 11. Each of the main body 11, the protrusion 2 and the stripe-shaped protrusion 4 has a structure in which the plurality of continuous filaments having random loops are partially fusion bonded and integrally formed.

The upper surface 1a and the lower surface 1c of the structure 1 are provided with surface layers 2a and 11a, and surface layers 4a and 11e. Each of these surface layers has a bulk density higher than either the average bulk density of the main body 11 or that of the inner portion 11c of the main body 11. By way of example, these surface layers 2a, 11a, 4a, 11e have a thickness of 2-4 mm. In the surface layers 2a, 11a, 4a, 11e, it is preferable that the looped filaments lie along the surface shape of the structure 1. The main body 11 includes the surface layer 11a (only present in the bottom portion 3), an inner portion 11c, and the surface layer 11e (only present in the stripe-shaped bottom portion 5). The surface layer 2a is present on the surface of the protrusion 2 and is continuous with the surface layer 11a of the bottom portion 3. Similarly, the surface layer 4a is present on the surface of the stripe-shaped protrusion 4 and is continuous with the surface layer 11e of the stripe-shaped bottom portion 5.

As shown in Fig. 5, the surface layer 11a on the bottom portion 3 has a thickness larger than that of the surface layer 2a at the top portion of the protrusion 2, or a high density portion is continuously present directly under the surface layer 11a. From the reason that a thickness-increased high density portion or a thickness-increased surface layer exists in a region near the bottom portion 3, it is possible to firmly support the protrusion 2, while at the same time, contributing to improve the durability of the protrusion 2 and the compression durability of the structure 1. If the surface layer 2a at the top portion of the protrusion 2 is too thick, it is not preferable because the top portion of the protrusion 2 loses the cushioning ability to feel. It is preferable to thicken the high-density surface layer of the bottom portion without increasing the thickness of the surface layer 2a. Similarly, the surface layer 11e of the stripe-shaped bottom portion 5 is thicker than the surface layer 4a of the stripe-shaped protrusion 4, or there exists a high-density portion directly above the surface layer 11e.

The protrusion 2 has the surface layer 2a and a central portion 2b covered with the surface layer 2a. The bulk density of the surface layer 2a is preferably 1.1-3 times the average bulk density of the central portion 2b. The average bulk density of the central portion 2b is preferably 1.05-3 times the average bulk density of the inner portion 11c (the portion excluding the surface layers 11a, 11e from the main body 11) of the main body 11. The average bulk density of the protrusion 2 (including the surface layer 2a and the central portion 2b) is each preferably 1.05-6 times the average bulk density of the main body 11 (including the inner portion 11c and the surface layers 11a, 11e), and more preferably 1.05-4 times that of the main body 11. The average bulk density of the protrusion 2 (including the surface layer 2a and the central portion 2b) is each preferably 1.05-7 times the average bulk density of the inner portion 11c. The bulk density of the surface layer 2a or the surface layer 4a is preferably 1.05-7 times the average bulk density of the main body 11 (including the inner portion1 1c and the surface layers 11a, 11e), and more preferably 1.4-5 times that of the main body 11. The bulk density of the central portion 2b does not need to be constant in the central portion 2b, and for example, the central portion 2b may be comprised of upper and lower two layers having different bulk densities.

The stripe-shaped protrusion 4 has the surface layer 4a and a central portion 4b covered with the surface layer 4a, and the bulk density of the surface layer 4a is preferably 1.1-3 times the bulk density of the central portion 4b. The bulk density of the central portion 4b is preferably 1.05-3 times the bulk density of the inner portion 11c of the main body 11. The average bulk density of the stripe-shaped protrusion 4 (including the surface layer 4a and the central portion 4b) is preferably 1.05-4 times the average bulk density of the main body 11 (including the inner portion 11c, the surface layer 11a, the surface layer11e of the stripe-shaped bottom portion 5). The side surface of the structure 1 is a flat surface. The upper surface 1a and the lower surface 1c are formed in different protrusion patterns, whereby the user can properly use the upper surface 1a and the lower surface 1c depending on the physical condition, preference and way of usage. On the lower surface 1c, instead of the stripe-shaped protrusion 4, a plurality of protrusions having a height H1, a width W, a hardness, and an arrangement which are different from those of the protrusions 2 on the upper surface 1a may be formed in a staggered, latticed, or linear pattern. The plurality of protrusions on the lower surface 1c may be the same as the protrusions 2 provided on the upper surface 1a.

For measurement of the bulk density or the like, the portion located above a virtual line V1 (see Fig. 5), which connects upper ends 39 of the respective bottom portions 3, is defined as the protrusion 2. Similarly, the portion below a virtual line V2, which connects lower ends 59 of the respective stripe-shaped bottom portion 5, is defined as the stripe-shaped protrusion 4 for measurement. The bulk density of the central portions 2b, 4b and the inner portion 11c is determined by first specifying the thickness of the surface layers, then removing the portions of the specified thickness from the surface, and measuring the bulk density of the remaining portion. Since the average bulk density of the protrusion 2 and the stripe-shaped protrusion 4 is high, the durability of the protrusion 2 and the stripe-shaped protrusion 4 is enhanced. As a result, the functions of air permeability, load dispersion, and acupressure effect can be sustained over a long period of time.

Preferably, at least one of the plurality of protrusions 2, more preferably 50% or more, and still more preferably 90% or more of the plurality of protrusions 2 are each provided with the surface layer 2a and the central portion 2b covered with the surface layer 2a. The average bulk density of the protrusion 2 is higher than that of the main body 11.

As shown in Fig. 5, the width W of the protrusion 2 in the X direction and the width W of the protrusion 2 in the Y direction (these correspond to the width of the row R and the row L) is preferably 8-70 mm. The height H1 of the protrusion 2 (the difference between the height of the top portion of the protrusion 2 and the height of the upper end 39 of the bottom portion 3) is preferably 3-70 mm. The height H1 of the protrusion 2 may be uniform over an entire region of the cushion, or may be nonuniform in response to a request. The height H2 (the difference in height between the top portion of the stripe-shaped protrusion 4 and the lower end 59 of the stripe-shaped bottom portion 5) of the stripe-shaped protrusion 4 is preferably 3-70 mm.

The structure 1 is used for a seat cushion, but may be applied to a mattress, a pillow, or a chair, or core material thereof.

The structure 1 may be whole one sheet, however, when used as, for example, a mattress, the structure 1 may be configured to be divisible into multiple sections in order to facilitate transportation and storage, and to allow adjustment of the protrusions according to the user's preference depending on the user's body areas. For example, in the case in which the structure 1 is divided into three divisions in the longitudinal direction, the three structures 1 may be housed in a cover or an inner cover respectively, and the covers may be combined when used. In this case, it is possible to change the hardness, the presence or absence of the protrusions, the bulk density, the arrangement and height of the protrusions, the bulk density of the protrusions, and the size and shape of the protrusions by the divided sections of the structure 1 or further upper or lower surface of the divided sections. When another structure is laminated on the structure 1, the material and shape of the laminate can be changed by the divided sections.

By way of example, as an example of the combination, a middle section (which comes into contact with the user's waist) among the three divided sections may be configured to have protrusions, while the other sections (which contact the user's head and foot) may have no protrusion or have protrusions with a height lower than that of the middle section. The structure may be adjusted so that the middle section, among the three divided sections, may be provided with protrusions having a higher bulk density compared to those of the other divided sections. Here, the structure 1 may not be divided completely and instead, a folding portion may be provided to make the structure 1 be bendable by means of a notch or the like.

When the structure 1 is used as a mattress, it is also preferable to make the structure 1 bendable by rolling procedure. In this case, the average bulk density is preferably 0.02-0.09 g/cm³. When the structure 1 is used as a core material of the pillow, it is preferable that the bulk density is relatively lower than that of the mattress. In this case, the average bulk density is preferably 0.01-0.07 g/cm³.

It is preferable that a sheet made of urethane foam and/or a nonwoven sheet or solid cotton is laminated on the upper surface side or the lower surface side of the structure 1. It is also preferable to laminate another three-dimensional network structure having a flat or uneven surface. For example, a sheet made of a urethane foam having a bulk specific gravity of 10 to 90 kg/m³, more preferably 20 to 60 kg/m³, a thickness of 2 to 50 mm, and more preferably 4 to 25 mm is preferably laminated on the upper surface or the lower surface of the structure 1 of 5 to 300 mm. A sheet made of urethane foam, a spring, or a nonwoven fabric may be incorporated into a cover to cover the structure, and may be fixed to the cover fabric by means of quilting.

The structure 1 may incorporate a vibrating unit inside or below it in order to enhance a massage effect due to the acupressure. In this case, a vibrating-unit accommodating portion, which is formed as a cavity, may be provided inside or below the structure 1, and positioned beneath at least some of the protrusions. The vibrating unit is accommodated into the vibrating-unit accommodating portion.

The structure 1 may have various configurations, such as including a hard end portion, surface layers with different thickness on the upper and lower sides, different levels of softness at the upper and lower sides, and internal holes. In addition, the hardness may be partially changed by varying the bulk density depending on the usage purpose or the portion of the structure 1. The inner portion 11c of the structure may include a sparse structure having low bulk density regions and dense bulk density regions, which are alternately arranged in the extruding direction. The inner portion 11c of the structure may be one in which a plurality of layers having different bulk densities are stacked in the up-and-down direction.

Since the thickness of the structure 1 is closely related to its softness and repulsion characteristics, the thickness of the structure 1 is preferably in the range of 10 to 400 mm, more preferably in the range of 25 to 150 mm, and even more preferably 30 to 110 mm. When the thickness is 10 mm or less and protrusions are formed, the thickness of the base portion and the protrusions become each about 5 mm and the cushioning properties are not sufficiently exhibited. In addition, the proportion of the surface layer in the protrusions becomes too large so that the cushioning properties may be impaired. The height of the protrusions may be also at most about 6 mm, which makes it difficult for the user's body to feel the effect of the protrusions. When the thickness is 25 mm or more, functions such as cushioning properties and acupressure properties can be provided. When the thickness exceeds 60 mm, the sufficient functions can be filled. When the thickness exceeds 400 mm, the further improvement of the function is not expected and it is not preferable.

In the case of the mattress, the dimensions of the structure 1 can be exemplified by the width of 600 to 2000 mm, length of 1300 to 2500 mm, height of 30 to 120 mm. In the case of the pillow, the dimensions of the structure 1 can be exemplified by the width of 250 to 500 mm, length of 300 to 800 mm, and height of 40 to 120 mm. However, the present invention is not limited thereto.

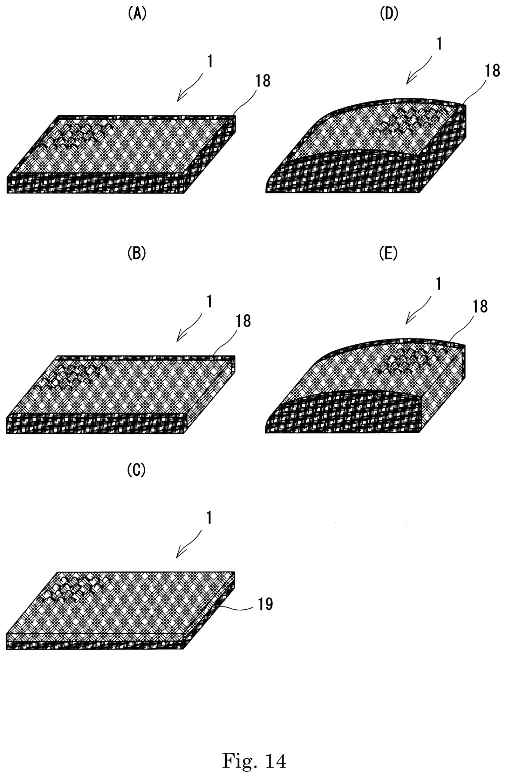

According to the structure 1 of the present embodiment, the acupressure effect is expected by means of the protrusions. However, when such effect is large, the structure 1 extends in the longitudinal or the lateral direction due to the protrusions pressing against the structure main body during use. As a result, the unevenness effect and the cushioning properties of the structure 1 may be reduced. In view of this, it is preferable that the structure 1 is provided with an elongation prevention member. Specifically, as shown in Fig. 14, the side surface is preferably provided with a high-density side surface portion 18 having a bulk density higher than the bulk density of the inner portion of the structure 1. In Fig. 14, the protrusions are shown only on a part of the surface for simplification purposes. The bulk density of the high-density side surface portion 18 is preferably, for example, 0.25-2.0 g/cm³, and the width of the high-density side surface portion 18 is 5-100 mm.

When used as the mattress (see Fig. 14A and Fig. 14B) for example, it is preferable that the high-density side surface portion 18 is provided on two side surfaces in the longitudinal direction and/or two side surfaces in the lateral direction. As a result, it is possible to suppress the reduction in acupressure effects and cushioning properties, which is caused by the structure extending in the longitudinal or the lateral direction. In addition, when the mattress is a three-folded or a three-divided mattress for example, it is possible to prevent a gap from being formed between the divided mattresses, the gap of which is caused by partially extending the structure in the longitudinal direction during usage. When used as the seat cushion (see Fig. 14D and Fig. 14E), it is preferable that a high-density side surface portion 18 is provided on two side surfaces in the left-right direction and/or the front-rear direction.

It is also effective to increase the bulk density of a partial region in the thickness direction as another method for preventing the structure 1 from extending in the longitudinal direction or the lateral direction due to the protrusions pressing the structure main body during use (see Fig. 14C). As the high density portion 19 in the thickness direction, for example, 0.25-2.0 g/cm³ and a thicknesse of 5-50 mm are exemplified. Such a high-density portion can be formed by increasing the amount of raw material supplied to the corresponding portion during the manufacturing process described below, or by performing the compressive molding at the portion.

Next, a three-dimensional network structure 101 of the second embodiment (hereinafter, also simply referred to as a structure 101) is described. Since the structure 101 is basically common to the structure 1, the structural difference from the structure 1 is mainly described. The structure 101 of the second embodiment is used as, for example, a mattress. The filaments are solid, substantially transparent, and are made of polyethylene-based resin, and the diameter is about 0.7 mm.

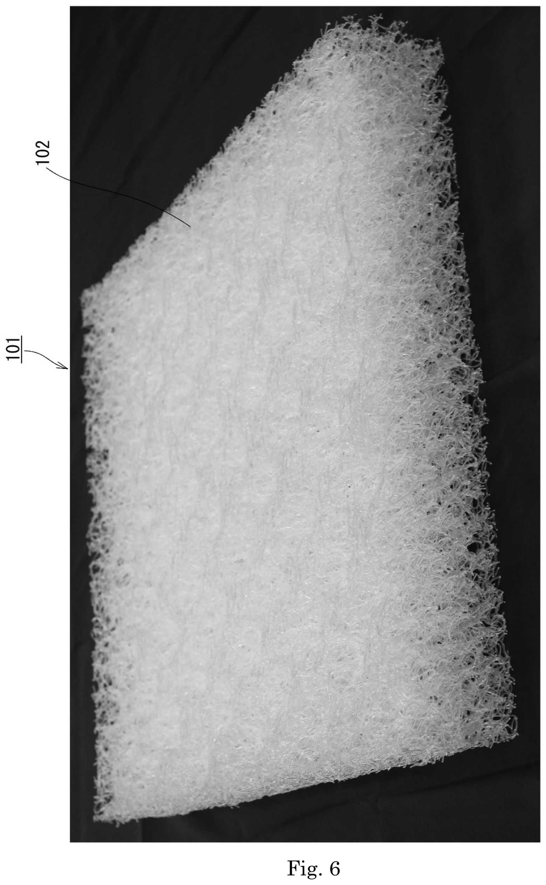

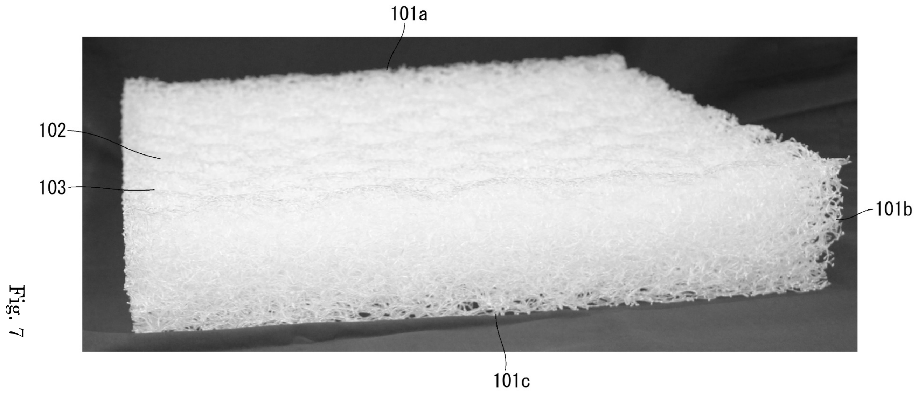

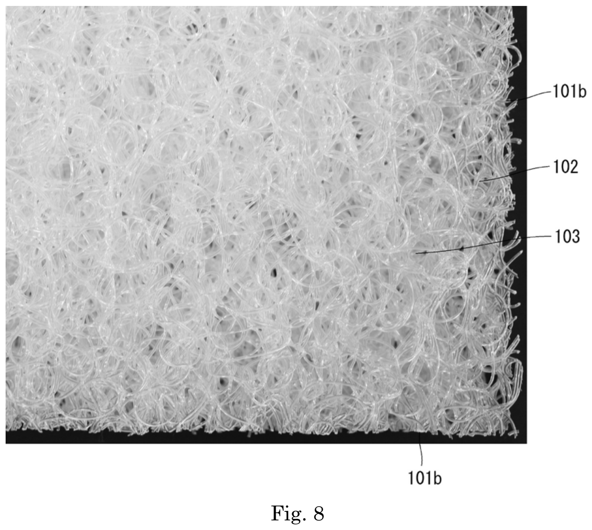

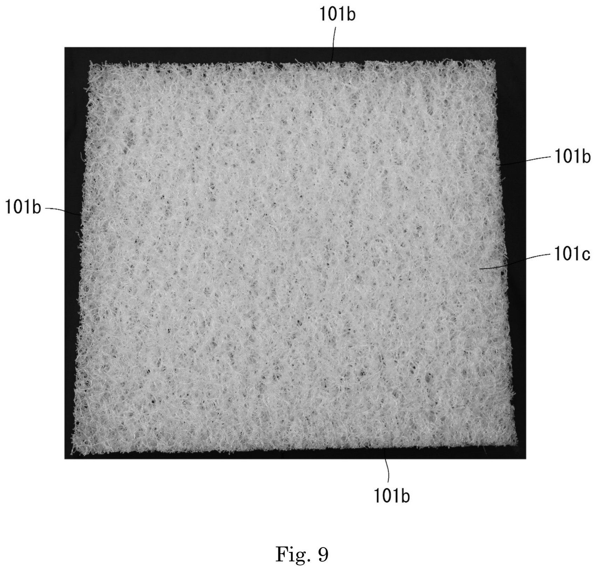

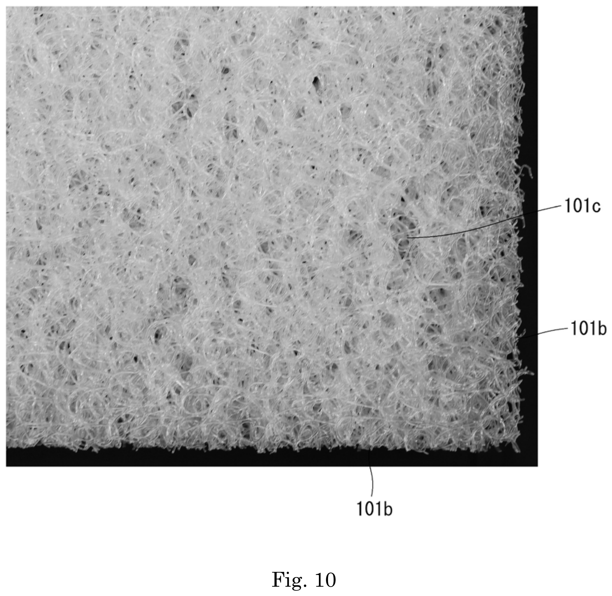

The structure 101 shown in Figs. 6 through 10 is appropriately cut for the purpose of explanation, and the dimensional size after being cut is 46 cm in length × 43 cm in width × 8 cm in maximum thickness. The structure 101 is formed as a hexahedron having an upper surface 101a, four side surfaces 101b, and a lower surface 101c, and an average bulk density on the whole is 0.068 g/cm³. The upper surface 101a is provided with protrusions 102 and bottom portions 103.

The protrusions 102 are regions protruding upward in the thickness direction at intervals on the upper surface 101a, and are a plurality of portions arranged in a staggered pattern. The side surface 101b and the lower surface 101c are flat surfaces. The hardness of the protrusions 102 can be adjusted by changing the bulk density of the protrusions. Unevenness configuration similar to that of the upper surface 101a may be provided on the lower surface 101c. The protrusions on the upper surface 101a and those of the lower surface 101c may have different height.

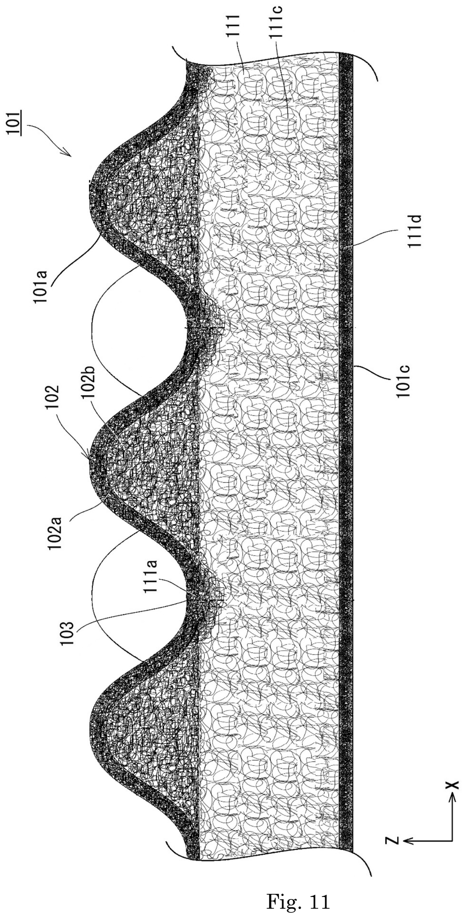

As shown in Fig. 11, the protrusion 102 is provided with a surface layer 102a and a central portion 102b covered with the surface layer 102a. On the lower surface side 101c of each structure 101, a surface layer 111d having a bulk density higher than that of the inner portion 111c of the three-dimensional network structure main body 111 (hereinafter, also simply referred to as a main body 111) is formed. The surface layer 102a has a bulk density of 1.1-3 times higher than that of the central portion 102b. The bulk density of the central portion 102b is preferably 1.05-3 times the bulk density of the inner portion 111c (the portion excluding the surface layers 111a, 111d) of the main body 111. The average bulk density of the protrusion102 (the portion including the surface layer 102a and the central portion 102b) is 1.05 to 4 times the average bulk density of the main body 111 (the portion including the surface layer 111a, the inner portion 111c, and the surface layer 111d). The number of the protrusions 102 is 414 per 1 m². With the protrusions 102 having the high average bulk density and the presence of the surface layer 102a, the function such as the acupressure effect is increased and the durability is also increased.

The three-dimensional network structure 1, 101 is used for a mattress, a seat of a vehicle, or a chair or a core material thereof. It is possible to provide a device capable of being used in a wide range of applications such as a health appliance for acupressure of the waist portion, the sole of foot, the calf and the like, a health promotion and maintenance device, and it is also possible to obtain an further effect when a vibration generating device having a massage function is added to the inside portion. The device can be used comfortably for a long period of time with the combined use with a sound and a VR device.

Next, an example of a manufacturing method for the three-dimensional network structure 1 and 101 according to the first and second embodiments is described. However, the present invention is not limited to this method. As described in Japanese Laid-Open Patent Application No. 2001-328153 and other documents, the raw material is molten at a melting temperature higher by 10°C to 20°C than a melting point of the raw material. The molten raw material is sent to the inside portion of a die, and the pressure is applied to discharge filaments from the extrusion ports of the lower nozzle. Each of the discharged filaments forms an assembly of filaments having a plurality of filaments according to the arrangement of multiple extrusion ports, and falls naturally.

The temperature inside the die may be set in a range of 100 to 400°C, and more preferably in a range of 120 to 350° C. The extrusion rate may be set, for example, to 20 to 200 Kg /HR. The pressure inside the die may be, for example, the discharge pressure generated by a 75 mm screw, and the pressure range thereof is approximately 0.2 to 25 MPa.

The diameter of the die nozzle inside the die corresponds to the diameter of the filaments of the structure, and is preferably in the range of 0.1 to 5.0 mm, and more preferably in the range of 0.4 to 1.8 mm.

Next, the filaments are received by a pair of left and right shooters with water or hot water supplied to the shooters (refer to the public publication of the International Publication No. WO 2012/157289). The filaments are brought into contact with each other in a molten state and fused and bonded, and allowed to land on the water surface while forming the three-dimensional network structure. At this time, the diameter of the loop and the diameter of the filaments are determined by angles of the shooters, the amount of water to be supplied, the diameter of the extrusion port, the distances between the nozzle and the shooters and the take-up conveyor, the molten viscosity of the resin, the hole diameter and the discharge rate of the extrusion port, etc. The filament diameter is in a range of 0.1 to 5.0 mm, and the average diameter (length) of the random loop is in a range of 5 to 50 mm.

In the assembly of filaments, the filaments positioned on the longitudinal side surface of the outer periphery is brought into contact with upper surfaces of the inclined surfaces of a pair of longitudinal shooters, on which water is flowing. As a result, vertical falling path of such filaments is disturbed, and the filaments slide down along the inclined surface while being entangled in a loop-shaped configuration with adjacent filaments, and being carried by water or heated water supplied from a supply pipe. During this process, the filaments are directly affected by gravity and become entangled along the inclined surfaces, thereby forming loops. A pair of lateral shooters may be provided, or an integrally formed single shooter may be employed. Further, the shooter may not be provided.

When the shooters are provided, the filaments in the filaments assembly that drop without being in contact with any of the inclined surfaces of the shooters passe through the molding opening. At this time, among the filaments passing through the molding opening, the filaments passing near the lower edge of the inclined surfaces are brought into contact with the filaments sliding down along the inclined surfaces and entangled in a loop-shaped configuration. The disturbance of the descent trajectory caused by the contact and entanglement of filaments is transmitted to adjacent filaments located more centrally, to a certain extent, as the filaments descend. Among the filaments passing through the molding opening, the filaments passing near the center of the molding opening land on the water surface. From the reason that the take-up speed by a take-up machine (described hereinafter) is slower than the descending speed of the filament assembly, each of the landed filaments is bent and entangled in a substantially loop-shaped configuration near the water surface.

The three-dimensional network structure is cooled in the water tank while being drawn downward by the pair of take-up machines at a speed slower than the descent speed of the filament assembly, and held between the take-up machines to receive an auxiliary compressive action. The take-up speed of the take-up machines is preferably in the range of 5 to 40 m/hour. It is to be noted that the take-up machines take up the filaments assembly by using an endless conveyor of a caterpillar structure (refer to the public publication of International Publication No. WO2012/157289). At the time when the filaments assembly descends to the endless conveyor position, the cooling solidification of the filaments assembly through submersion is not completely finished, and thus the compressive molding effect is obtained by holding the filaments assembly between the take-up machines. When the filaments assembly is taken out by the take-up machines and sent out, the filaments assembly in a molten state is cooled and solidified by water to finally fix the shape. Thereafter, it is drawn out from the cooling tank by holding it between rollers.

A method for forming the protrusions on the upper surface and/or the lower surface of the three-dimensional network structure includes, for example, cutting the continuous three-dimensional network structure into an appropriate size after the cooling solidification, and then sandwiching the three-dimensional network structure by using a heated plate on the upper surface and/or the lower surface of the three-dimensional network structure, or placing the lower surface on a support base and applying the heated plate from above, thereby molding and compressing the three-dimensional network structure to form the protrusion 2. It is possible to form the unevenness configuration at the same or shifted position on one side and the reverse side of the structure 1. The unevenness configuration can be formed to have different patterns or sizes depending on the sides thereof.

As another method for forming the protrusions 2 on the upper surface of the three-dimensional network structure 1, it is also possible to mold protrusions by means of the compressive action of take-up machine before the structure is solidified by cooling, by attaching components having an uneven surface and a clamping function for holding the structure (based on its shapes, materials, etc.) to the above-described take-up machine (endless conveyor). In the case of forming the protrusions arranged in a staggered pattern, the components having uneven surface in which the recesses and protrusions are formed in staggered pattern are attached to the take-up machines. This allows the structure to be formed with the recesses and protrusions without slipping, without defects, and enables the protrusions to have a higher bulk density. Particularly, a surface layer having a high bulk density can be formed on the protrusions. The components having uneven surface can be attached to both of the pair of take-up machines, or can be attached to one of the pair of take-up machines. The protrusions and recesses may be formed at the same position or shifted position on one side and the reverse side of the structure 1. Further, the protrusions and recesses can be formed to have different patterns or sizes depending on the sides thereof.

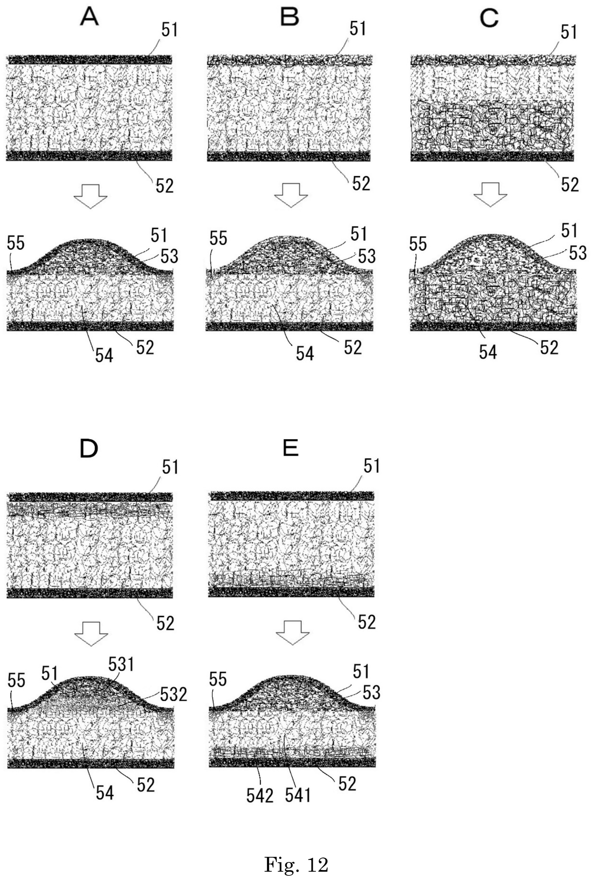

Figs. 12A-E show schematic diagrams illustrating the formation of the protrusions 2 by the method described above. As shown in Fig. 12A, when the protrusions formation described above is performed on the three-dimensional network structure in which the surface layers 51, 52 are formed, the surface side region inside the structure is compressed to form the central portion 53 of the protrusions, while the other regions remain as the inner portion 54 in the structure. As a result, the protrusion having a higher bulk density at the central portion 53 than the inner portion 54 is formed, while maintaining the surface layers 51 and 52. In the method for forming the protrusions before the structure is cooled and solidified, a thick surface layer 55 is formed at the bottom portion due to compression.

Fig. 12B shows an explanatory diagram illustrating the case where the bulk density of the surface layer 51 of the three-dimensional network structure prior to the protrusion formation, is smaller than that in Fig. 12A. This allows the bulk density of the central portion 53 and the surface layer 51 in the protrusion to be made the same, or alternatively, the bulk density of the central portion 53 may be made larger than that of the surface layer 51 to render the surface feeling tender. The thickness and bulk density of the surface layer 51 of the protrusion can be controlled by adjusting the thickness and the bulk density of the surface layer 51 of the network structure prior to the protrusion formation. The thickness and the bulk density of the surface layers 51, 52 of the network structure prior to the protrusion formation can be controlled, for example, by adjusting the nozzle shape and the interval distance between the nozzles.

Fig. 12C illustrates the case where the bulk density inside the structure before protrusion formation is configured as two layers, with the bulk density of the surface side layer being relatively low, resulting in a relatively low bulk density at the central portion 53 of the protrusion 2. As a result, the difference between the bulk density of the central portion 53 and the inner portion 54 can be reduced, or the bulk density of the inner portion 54 can be made larger than that of the central portion 53. The ratio of the bulk density of the inner portion 54 to the central portion 53 of the protrusion can also be controlled by setting the bulk density of inside the structure prior to the protrusion formation to be a plurality of layers. As an example of method for forming the two-layer bulk density before protrusion formation, adjusting the interval distance between the nozzles of the die can be employed. The hardness of the protrusion can be adjusted by adjusting the thickness, the bulk density of the surface layer 51, and the bulk density of the central portion 53 of the protrusion. In other words, both hard and tender protrusions can also be formed as desired. The protrusions having different bulk densities can be freely designed.

Fig. 12D shows a diagram illustrating the case where the interior of the structure before protrusion formation is configured as two layers by increasing the bulk density on the surface-layer side, resulting in the bulk density of the center portion of the protrusion 2 having a two-layer structure having an upper layer 531 and a lower layer 532. In Figure 12D, the upper layer 531 has a higher bulk density than the lower layer 532; however, the opposite configuration is also possible.

Fig. 12E shows a diagram illustrating the case where the interior of the structure before protrusion formation is configured as two layers by increasing the bulk density on the back-surface side, resulting in the bulk density of the interior of the structure having a two-layer configuration consisting of an upper layer 541 and a lower layer 542. In Figure 12E, the lower layer 542 has a higher bulk density than the upper layer 541. However, the opposite configuration is also possible. Furthermore, configurations with three or four layers, instead of two, are also possible.

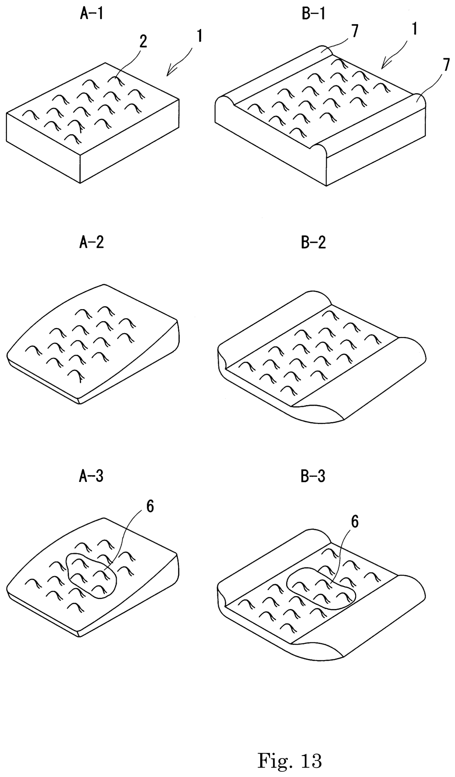

As shown in Fig. 13, the three-dimensional network structure 1 may be subject to thermal-processing or ultrasonic-processing after molding, and the molded product may be one with an irregular shape. As shown in Fig. 13A, for example, a molded article (A-1) may be subjected to thermal processing or ultrasonic processing to form an inclination as a whole (A-2), and may further be subjected to thermal processing to form a recess 6 in a central portion (A-3) by way of example. As shown in Fig. 13B, an irregularly molded article (B-1) having raised portions 7 as holding portions on the left and right sides may be similarly compressed as a whole by thermal processing or ultrasonic processing (B-2), and the recess 6 can be formed, for example, in the central portion with further thermal processing (B-3). In such cases, the protrusion 2 can be remained on the surface even in the inclined surface or the recessed portion by controlling the processing conditions.

Hereinafter, Examples and Comparative Examples will be described.

The body pressure dispersion characteristics were measured for the test specimens of Examples 1 through 5 and Comparative Examples 1 through 2, as described below, in a state in which two test subjects were seated: one denoted as G (body weight: 85 kg) and the other as A (body weight: 48 kg). In the measurement, data of the body pressure dispersion measurement was obtained in a state where each test subject was seated on the respective test specimen by using an SR Soft Vision buttock measurement device manufactured by Sumitomo Riko Co. Ltd. The details of the Sumitomo Riko SR soft vision measuring device are described in https://www.sumitomoriko.co. jp/product/health/SVZB922AM/. The measurement results are shown in Table 1.

The body pressure dispersion characteristics in a state in which two test subjects were in supine position were measured for the test specimens of Example 1 and Comparative Examples 1 through 3. The measurements were conducted using the full-body version of the SR Soft Vision measurement device manufactured by Sumitomo Riko Co., Ltd. Body pressure dispersion measurement data was obtained in a state where each test subject laid in the supine position on the respective test specimen. The measurement results are shown in Table 2.

### [Example 1]

The test specimen according to Example 1 is a three-dimensional network structure having a thickness of 8 cm, and composed of filaments having a diameter of 0.7 mm and made of polyethylene resin. A plurality of protrusions are formed in a staggered pattern on the surface of the test specimen. The total average bulk density is 0.090 g/cm³. The surface layer 2a has a bulk density of 0.161 g/cm³ and a thickness of about 3 mm. The flat rear-side surface layer 11d (identical to 111d in Fig. 12) has the bulk density of 0.189 g/cm³ and a thickness of 3 mm. Each protrusion is formed with approximately the same bulk density. The average bulk density of each protrusion (including the surface layer 2a and the central portion 2b) is 0.10g/cm³, and the bulk density of the central portion 2b of the protrusion is 0.07 g /cm³. The bulk density of the inner portion 11c of the structure is 0.05 g /cm³. The number of protrusions is 500 per 1 m². The height of each protrusion 2 is uniform, and the height H of the protrusion is 7 mm. The width W of the protrusion is 55 mm. The average bulk density of the three-dimensional network structure main body (the portion excluding the protrusion and including the surface layer 11a, the inner portion 11c, and the rear-side surface layer 11d) is 0.089 g/cm³.

### [Example 2]

The test specimen according to Example 2 is a three-dimensional network structure having a thickness of 4.0 cm, and composed of filaments having a diameter of 1.0 mm and made of polyethylene resin. A plurality of protrusions 2 are formed in a staggered pattern on the surface of the test specimen. The surface layer 2a has a bulk density of 0.206 g/cm³ and a thickness of 3 mm. The rear-side surface layer 11d has a bulk density of 0.185 g/cm³ and a thickness of 3 mm. The average bulk density of each protrusion 2 (including the surface layer 2a and the central portion 2b) is 0.055 g/cm³ and the bulk density of the central portion 2b of the protrusion is 0.041 g/cm³. The bulk density of the inner portion 11c of the structure is 0.038 g/cm³. The number of protrusions is 300 per 1 m². The height of each protrusion 2 is uniform, and the height H1 of the protrusion is 16 mm. The width W of the protrusion is 50 mm. The average bulk density of the three-dimensional network structure main body (the portion excluding the protrusion and including the surface layer 11a, the inside portion 11c, and the rear-side surface layer 11d) is 0.046 g/cm³.

### [Example 3]

The test specimen of Example 3 is obtained by laminating a urethane sheet (thickness of 20 mm and bulk density of 0.02 g/cm³) on the specimen of Example 1.

### [Example 4]

The test specimen of Example 4 is a three-dimensional network structure having a thickness of 11 cm, and composed of filaments having a diameter of 0.4 mm and made of polyethylene resin. Stripe-shaped protrusions 4 are formed on the surface of the test specimen. The total average bulk density of the test specimen is 0.032 g/cm³. The surface layer 4a has a bulk density of 0.056 g/cm³ and a thickness of 3 mm. The rear-side surface layer 11d has a bulk density of 0.080 g/cm³ and a thickness of 3 mm. The bulk density of the central portion 4b of the stripe-shaped protrusion is 0.027 g/cm³. The average bulk density of each stripe-shaped protrusion 4 (including the surface layer 4a and the central portion 4b) is 0.034 g/cm³ and the average bulk density of the three-dimensional network structure main body (the portion excluding the stripe-shaped protrusion 4 and including the surface layer 11e, the inner portion 11c, and the rear-side surface layer 11d) is 0.025 g/cm³. The height H2 of the stripe-shaped protrusion 4 is 4 mm.

### [Example5]

Example 5 is obtained by rotating Example 4 by 90 degrees in plan view.

### [Comparative Example 1]

The test specimen according to Comparative Example 1 is a three-dimensional network structure having a thickness of 6 cm, and composed of filaments having a diameter of 0.8 mm and made of colorless polyethylene resin. The surface is flat with no protrusions or depressions formed thereon. The total average bulk density is 0.055 g/cm³. The surface layers having a higher bulk density than the inner portion are provided on both the top surface and the bottom surface. The top surface layer has a thickness of 3 mm and a bulk density of 0.127 g/cm³, and the bottom surface layer has a thickness of 3 mm and a bulk density of 0.115 g/cm³. The bulk density of the inner portion, excluding the surface layers, is 0.047 g/cm³.

### [Comparative Example 2]

The test specimen according to Comparative Example 2 is the urethane foam for mattresses with a thickness of 45 mm, and profile-processed to form protrusions having a height of 30 mm on its surface.

### [Comparative Example 3]

The test specimen of Comparative Example 3 is the urethane foam for a mattress having a flat surface.

**[Table 1]**

| Sample | Image | Test Subje ct G | | | | Test Subject A | | | |
|---|---|---|---|---|---|---|---|---|---|
| | | Measured Image | Max. | Ave. | Total | Measured Image | Max. | Ave. | Total |
| Exampe 1 | 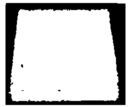 | 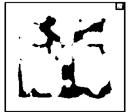 | 71 | 37 | 6797 | 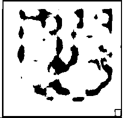 | 116 | 40 | 6064 |
| Comparative Example 1 | 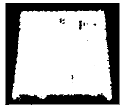 | 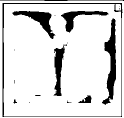 | 79 | 50 | 11587 | 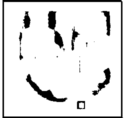 | 85 | 43 | 7008 |
| Example 2 | 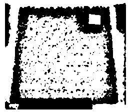 | 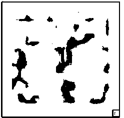 | 106 | 45 | 9396 | 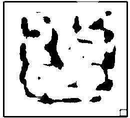 | 173 | 42 | 5983 |
| Example 3 | 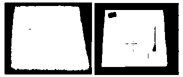 | 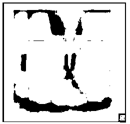 | 87 | 46 | 10430 | 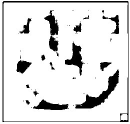 | 97 | 37 | 7681 |
| Example 4 | 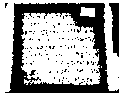 | 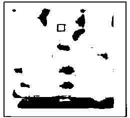 | 95 | 48 | 10897 | 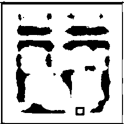 | 100 | 40 | 6684 |
| Example 5 | 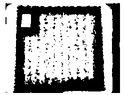 | 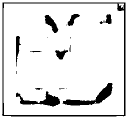 | 87 | 48 | 10532 | 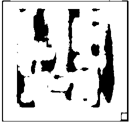 | 82 | 38 | 6521 |
| Comparative Example 2 | 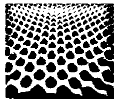 | 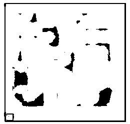 | 70 | 37 | 7403 | 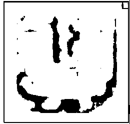 | 69 | 39 | 7252 |

As shown in Table 1, when the test specimens are used as a cushion sheet and the test subjects are seated thereon, Examples 1 through 5 exhibit a partial pressing and pulling functions due to the protrusions, upon comparing with the test specimen of Comparative Example 1, resulting in the acupressure effect. Compared to the test specimen of Comparative Example 2, the maximum pressure value is higher, and a sufficient acupressure effect can be obtained regardless of subject's body weight. As can be seen from the comparison among Examples 1 through 5, the body pressure dispersion characteristics can be changed by adjusting the diameter of filaments, the bulk density of the protrusions and the pattern of the protrusions 2. Therefore, it is possible to meet the requests of individual users with different body types and preferences.

**[Table 2]**

| Sample | Image | Test Subject G | | | | Test Subject A | | | |
|---|---|---|---|---|---|---|---|---|---|
| | | Measured Image | Max. | Ave. | Total | Measured Image | Max. | Ave. | Total |
| Example 1 | 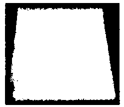 | 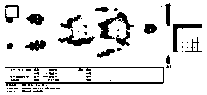 | 110 | 36 | 11406 | 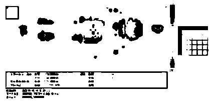 | 110 | 35 | 7772 |
| Comparative Example 1 | 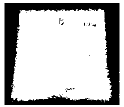 | 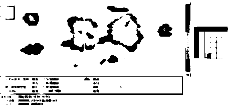 | 110 | 40 | 12126 | 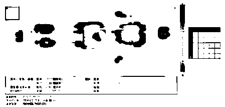 | 110 | 33 | 8355 |
| Comparative Example 2 | 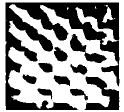 | 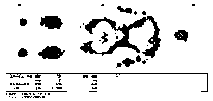 | 101 | 37 | 13460 | 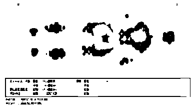 | 110 | 33 | 7711 |
| Comparative Example 3 | 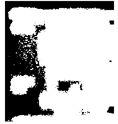 | 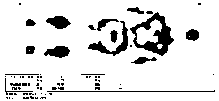 | 91 | 37 | 13132 | 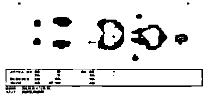 | 85 | 33 | 7649 |

As shown in Table 2, when the test specimens were used as a mattress and the test subjects were in a supine position, the specimens of Comparative Examples 1 to 3 exhibited concentrated pressure in the buttocks area, particularly in the case of the slender test subject (A). In contrast, in the test specimen of Example 1, the pressure was dispersed, and no area of concentrated pressure was observed. Furthermore, Example 1 also demonstrated an acupressure effect due to the presence of surface protrusions.

The present invention is not limited to the above-described embodiment, and various modifications, substitutions, deletions, and the like can be made without departing from the technical idea of the present invention, and modifications, equivalents, substitutions, deletions, and the like are also included in the technical scope of the present invention. The protrusions and the stripe-shaped protrusions do not need to be provided on the entire surface of the network structure, and can be provided partially or only in a specific region in response to a request.

### Industrial Availability

The three-dimensional network structure of the present invention can be applied as a cushioning or core material in mattresses, cushions, sofas, beds, seats, or the like.

### Reference Signs List

1, 101: three-dimensional network structure
2, 102: protrusion
2a, 102a: surface layer
2b, 102b: central portion
3, 103: bottom portion
4: stripe-shaped protrusion
4a: surface layer
4b: central portion
5: stripe-shaped bottom portion
11, 111: three-dimensional network structure main body
11a, 111a: surface layer (at the bottom)
11c, 111c: inner portion
11d, 111d: rear side surface layer
11e: surface layer (at the stripe-shaped bottom portion)
51: surface layer
52: surface layer
53: central portion
54: inner portion
55: surface layer (bottom portion)
H: height of the protrusion
W: width of the protrusion

## Claims

1. A three-dimensional network structure used as a cushion, having a total average bulk density of 0.01-1.5 g/cm³, and comprising a plurality of continuous filaments having random loops and being partially fusion bonded,
the three-dimensional network structure comprising:
a three-dimensional network structure main body;
a plurality of protrusions formed on a specific surface of the three-dimensional network structure main body and protruding in a thickness direction thereof,
wherein the plurality of protrusions are continuously provided via bottom portions interposed therebetween and having a height lower than that of top portions of the protrusions, and at least one of the plurality of protrusions have an average bulk density that is 1.05 - 6 times the average bulk density of the three-dimensional network structure main body.

2. The three-dimensional network structure according to claim 1,
wherein the protrusions have a bowl shape, a conical shape, a chevron shape (excluding a shape with flat top portion), or a polygonal pyramid shape, and
the plurality of protrusions are continuously provided in a first direction via the bottom portions interposed therebetween and having a height lower than that of the top portions of the protrusions , and the plurality of protrusions are continuously provided in a second direction perpendicular to the first direction via the bottom portions interposed therebetween and having a height lower than that of the top portions of the protrusions.

3. The three-dimensional network structure according to claim 1 or 2,
wherein the plurality of protrusions are arranged in a staggered pattern,
each of the protrusions and the bottom portions have a surface layer having a bulk density higher than an average bulk density of an inner portion of the three-dimensional network structure main body, and the surface layer of the bottom portions is thicker than the surface layer of the top portions of the protrusions, or a high-density portion is continuously present directly below the surface layer of the bottom portions.

4. The three-dimensional network structure according to claim 3,
wherein each of the plurality of protrusions has the surface layer and a central portion covered by the surface layer, and the surface layer has a bulk density higher than that of the central portion.

5. The three-dimensional network structure according to claim 4,
wherein an average bulk density of the central portion of at least one protrusion of the plurality of protrusions is higher than the average bulk density of the inner portion of the three-dimensional network structure main body.

6. The three-dimensional network structure according to claim 1 or 2,
wherein a number of the protrusions is 100 - 2500 per 1 m².

7. The three-dimensional network structure according to claim 1 or 2,
wherein the three-dimensional network structure is laminated with at least one of a urethane foam, a nonwoven sheet and another three-dimensional network structure, or is laminated with a urethane foam, a nonwoven fabric, or a double russell fabric as a cover covering the protrusions.

8. The three-dimensional network structure according to claim 1 or 2,
wherein the protrusions are arranged in one of a linear, staggered or lattice pattern.

9. The three-dimensional network structure according to claim 1 or 2,
wherein the height or the average bulk density of the protrusions is different depending on a region of the three-dimensional network structure.

10. The three-dimensional network structure according to claim 1 or 2,
wherein the protrusions are formed on an upper surface and a lower surface of the three-dimensional network structure main body, and a shape, a bulk density, a height, or an arrangement of the protrusions formed on the upper surface is different from the protrusions formed on the lower surface.

11. The three-dimensional network structure according to claim 1 or 2,
wherein a recessed portion or an inclined portion is formed by thermal processing or ultrasonic processing on a specific surface on which the protrusions are formed, and the protrusions remain in the recessed portion or the inclined portion.

12. The three-dimensional network structure according to claim 1 or 2,
further comprising a high-density side surface portion having a higher density than the average bulk density of the three-dimensional network structure main body on at least two opposing side surfaces.

13. The three-dimensional network structure according to claim 1 or 2,
further comprising an elongation prevention member configured to prevent the three-dimensional network structure from extending in a longitudinal direction or a lateral direction, wherein the elongation prevention member is a high-density side surface portion that has a higher density than the average bulk density of the three-dimensional network structure main body, and is disposed on at least two opposing side surfaces.

14. A seat cushion, a mattress, a pillow or a chair comprising the three-dimensional network structure according to claim 1 or 2.
